# EUROPEAN PATENT SPECIFICATION

(11) **EP 1 508 725 B1**
(45) Date of publication and mention of the grant of the patent: **09.04.2008**
(21) Application number: 04254812.3
(22) Date of filing: 11.08.2004
(51) Int. Cl.: F16H 31/00, C05F 17/02

(54) **Rotary drive unit with hydraulic ram assemblies**
Drehantrieb mit hydraulischen Zylindern
Entraînement rotatif avec vérins hydrauliques

(30) Priority: 20.08.2003 GB 0319489
(43) Date of publication of application: 23.02.2005
(73) Proprietor: Civic Environmental Systems Limited, Sheffield South Yorkshire S1 2ET (GB)
(72) Inventor: Cooper, James Nicholas, Huddersfield South Yorkshire (GB)
(74) Representative: Moffat, John Andrew

(56) References cited:
- WO-A-99/16730
- FR-A- 943 069
- FR-A- 1 324 998
- GB-A- 985 072
- US-A- 3 186 260
- US-A- 3 515 009

## Description

This invention relates to a drive assembly intended particularly, though not exclusively, for use in the digester disclosed in our British Patent Specification No. 2344584.

In said Specification it is stated that each of a number of compartments of the digester disposed one above the other has a set of rotatable arms therein mounted on a rotational drive unit. US 3515609 A discloses a drive assembly according to the preamble of claim 1.

An object of the invention is to provide an improved drive unit in a convenient and effective form.

According to the present invention there is provided a drive assembly comprising reciprocating drive means which in one direction of its reciprocating movement from a rest position is in engagement with part of a rotational hub to drive it angularly in one direction to a position where latch means retain the hub against movement in a direction opposite to that in which it is driven, the drive means upon its reciprocating movement in the other direction returning to said rest position, whereupon when its reciprocating cycle repeats, it again drives the previously driven and latched hub angularly in said one direction to a position where it is retained by said latch, so that continuous such reciprocation of the drive means effects rotation of the hub and thus drive thereat, wherein the drive means includes two opposed, parallel drive ram assemblies which extend and retract in unison to effect drive of said hub angularly in said one direction, the drive ram assemblies being connected to respective diametrically opposed portions of an outer drive plate, characterised in that the hub has rotatable therewith an inner drive plate around at least a portion of which is said outer drive plate, the outer drive plate comprising an annulus within which is disposed the inner drive plate and in that the periphery of the inner drive plate is formed with a series of locations for engagement consecutively with said drive means to move the inner drive plate angularly upon each reciprocation of the drive means.

Preferably the drive ram assemblies are connected to respective diametrically opposed portions of an outer drive plate. In one embodiment the drive ram assemblies are connected to said portions at the periphery of said outer drive plate. The drive ram assemblies can each be a piston and cylinder arrangement.

Advantageously each location around the periphery of the inner drive plate is provided with a drive pin, which is preferably replaceable, for example when worn. The drive pin is engaged by a complementarily shaped end of a drive arm of the drive means when the drive means engage the hub to move it angularly.
The drive means can include two drive arms, each pivoted on the outer drive plate and biased to a position to engage one of said drive pins. A free end of each drive arm may be of part cylindrical form matching the part of the drive pin with which it engages. The drive arms may, in one embodiment, be pivoted to the outer drive plates at respective diametrically opposed inner peripheral portions thereof. Each location may provide, in
said one or another embodiment, an outer surface over which the drive arm, released from its engagement with a drive pin, rides against its bias, when the outer drive plate is angularly moved by the drive means returning to its rest position.

Desirably the hub has rotatable therewith a ratchet plate, and in one embodiment around the periphery of the ratchet plate is a series of ramps and shoulders engagable by the latch means as the hub is moved angularly by consecutive reciprocations of the drive means.

Preferably the latch means comprises two latches attached to a plate fixed relative to the rotatable hub. In one embodiment, the two latches are respectively attached to said fixed plate at diametrically opposed positions. Each latch may comprise a mounting plate, fixed to said fixed plate, and a latch element pivotally attached to said mounting plate. Each latch element may be biased into engagement with said ratchet plate, an outer free end and engaging one of said shoulders thereof, when the drive means returns to its rest position, to retain the hub against movement in said other direction, and riding over one of said ramps to move to engagement with the next successive shoulder when the hub is angularly driven in said one direction by the drive means.
A plurality of outwardly extending arms may be connected to the hub, so as to move rotationally therewith, in use. At the central rotational axis of the hub there may be provided an air supply tube for passing air, in use, to the arms. Each arm may have at least one air nozzle therein for injecting air, supplied to one end thereof from said air supply tube, out of the arm at a position along its length.

The invention will now be described, by way of example, with reference to the accompanying drawings, in which:
Figure 1 is a part sectional side view of a drive assembly of the invention,
Figures 2 to 4 are views taken on the lines 2-2, 3-3 and 4-4 respectively of Figure 1,
Figure 5 is a detail of B in Figure 4,
Figure 6 is a section on line 6-6 of Figure 5,
Figure 7 is a detail of A in Figure 1,
Figure 8 is a detail of C in Figure 1,
Figure 9 is a detail of D in Figure 3,
Figure 10 is a section of line 10-10 of Figure 9,
Figure 11 is a side view of a hub of the drive assembly of Figure 1,
Figure 12 is central section through the hub,
Figures 13 to 15 are respectively views on the lines 13-13, 14-14 and 15-15 of Figure 11,
Figure 16 is a section on line 16-16 of Figure 15,
Figure 17 is a plan view of a drive arm of the drive assembly of Figure 1,
Figure 18 is a section on the line 18-18 of Figure 17,
Figures 19 and 20 are respectively a side view and a top view of a latch mounting plate of the drive assembly, and
Figures 21 to 23 are respectively an end view, a side view and an underneath view of a latch of the drive assembly.

As referred to in the introduction, a drive assembly of the present invention has been particularly designed for use in a waste material digester as disclosed in British Patent Specification No. 2344584. In said digester each of a number of compartments disposed one above the other is provided with a set of rotatable arms mounted on a rotational drive unit. An example of such a rotatable drive unit will hereinafter be described.

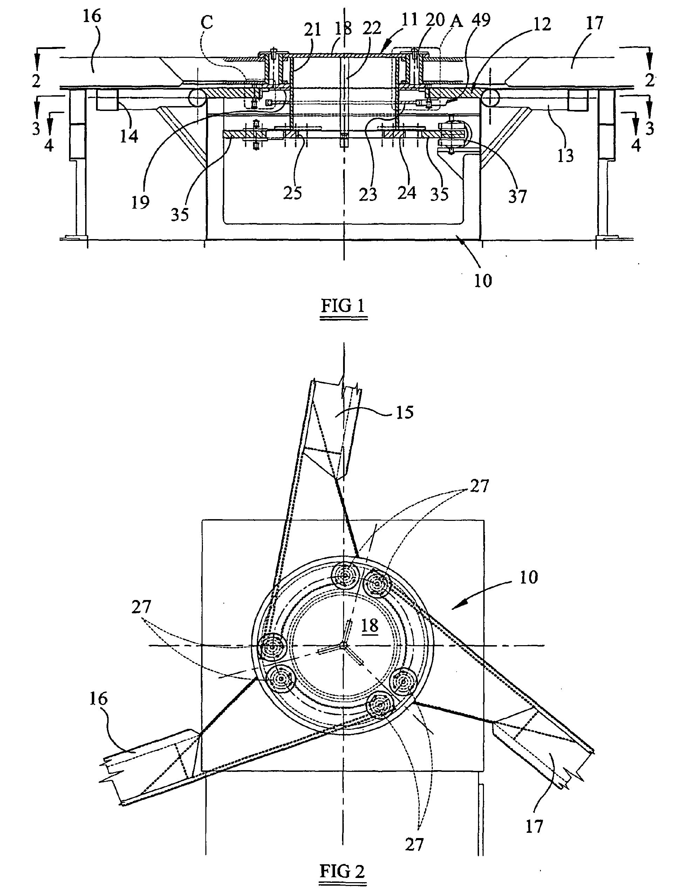

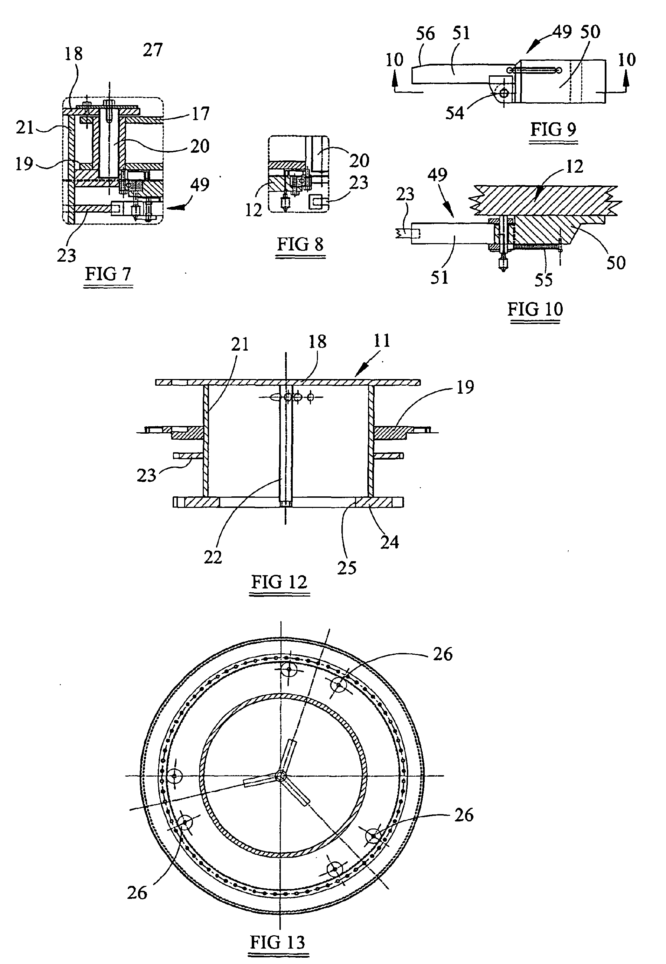

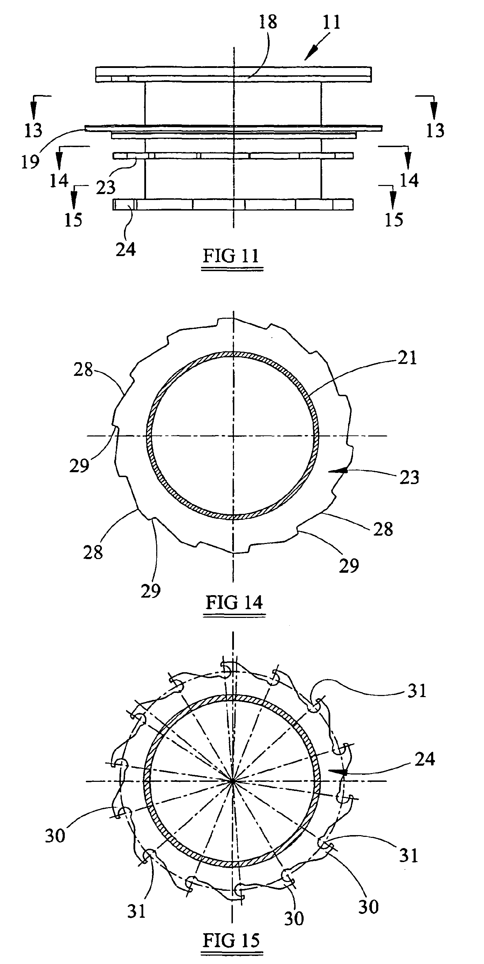

From Figures 1 and 2 there can be seen a floor module centre section 10 of a compartment of the digester and arranged centrally of this is a rotational hub, shown alone in Figures 11 and 12, of the drive assembly. At the top of the section 10 is fitted a fixed floor module centre section top plate 12 and at respective opposite sides of this are doors 13, 14 to transmit biodegradable material, in use, to the compartment therebelow. It will been seen that the hub has connected to it three equi-angularly spaced arms 15, 16, 17 respectively, and as stated in the above numbered British patent, these rotate in a compartment of the digester when the drive assembly, including the hub, rotates, in use, as will be described. It will be seen that each arm is fixed at its inner end between a top plate 18 of the hub and a parallel lower plate 19 thereof by means of a mounting pin 20 shown in detail in Figure 7.

As can be seen from Figures 11 and 12, the hub has a hollow cylindrical body 21 fixed to and extending vertically from the underside of the top plate 18. At the rotational centre of this body 21 is a tube 22 with a universal rotary joint at its lower end. This tube allows air to pass from a series of blower fans through to the arms 15-17, which in turn have air nozzles fitted along the length thereof, thus enabling air to be injected into the waste material to control the temperature of the digester. As stated, a lower plate 19 is below and parallel to the top plate 18, this being welded or otherwise secured in place as shown in Figure 12 and receiving the lower end of the mounting pin 20 as shown in Figure 7. The external diameter of this plate 19 is slightly larger than the external diameter of the top plate 18. A short vertical distance below the plate 19 is a ratchet plate 23, which, like the plate 19 is annular, in contrast to the top plate 18 which is wholly circular. This ratchet plate 23 is welded or otherwise fixed to the exterior of the body 21, so as to lie parallel to the top plate 18, its outside diameter being somewhat less than the exterior diameter of the plate 18. Finally at the bottom of the hub there is secured to the lower annular end surface of the body 21, by welding or otherwise, a circular inner drive plate 24 which has an exterior diameter substantially equal to that of the ratchet plate 23, to which it is parallel. The end of the shaft 22 passes through a circular central opening 25 in plate 24, this opening having a diameter only slightly less than the internal diameter of the body 21.

Figure 13 shows three equi-angularly spaced pairs of arm mounting bores 26 in the plate 19 and Figure 2 shows respective drive-arm mounting pin retaining plates 27 fitted thereat, these also being shown in Figure 7.

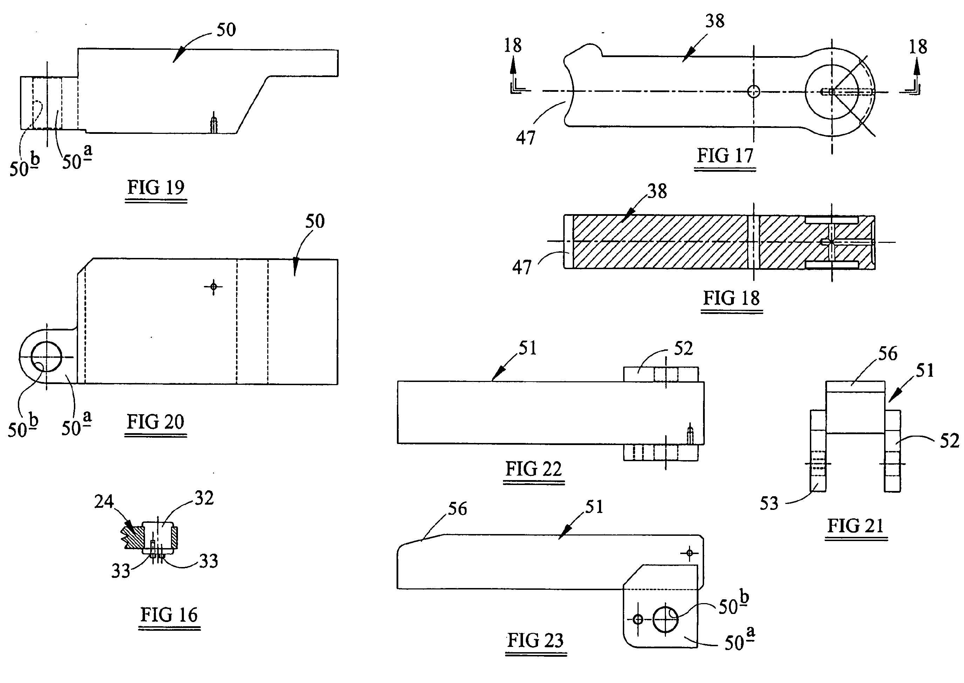

Figure 14 shows the ratchet plate 23, and from this it can be seen that this annular plate is provided around its periphery with a series of ratchet-like ramp surfaces 28 leading to generally radial shoulders 29 for a purpose to be described hereinafter. The inner drive plate 24 shown in detail in Figure 15 has around its outer periphery, a series of fingers 30 defining respective locations 31, in each of which is fitted a generally cylindrical drive pin 32, each location being part-cylindrical so that the pin can be received therein, as shown in Figure 16. Each pin has a circular flanged top which rests on the top of the plate 24 as shown and prevents downward movement of the pin into the location 31. The pin is fixed in position by means of a lower retainer plate 33 of the same form as the flange at the top of the pin, this plate 33 being secured outside of the location to the bottom of the pin by a pair of hexagon socket caphead screws 34 with associated spring washers. Each pin is of a material which although relatively hard, will wear more than the material of the inner drive plate in use, as will be described hereinafter. Accordingly as will be described, instead of replacing the drive plate upon wear in use, it is merely necessary to undo the screws 34, to release the plate 33, whereupon a worn pin 32 can be removed from its location 31 and replaced by a new pin.

In the embodiment described an illustrated, there are fourteen shoulder surfaces around the periphery of the ratchet plate and similarly there are fourteen locations 31 around the periphery of the inner drive plate. It is important that the annular orientation of the inner drive plate and the ratchet plate respectively is maintained as shown in Figures 14 and 15 relative to each other. In other embodiments, it would of course be possible to have a different number of locations and ratchet shoulders, although these would generally always be the same as each other.

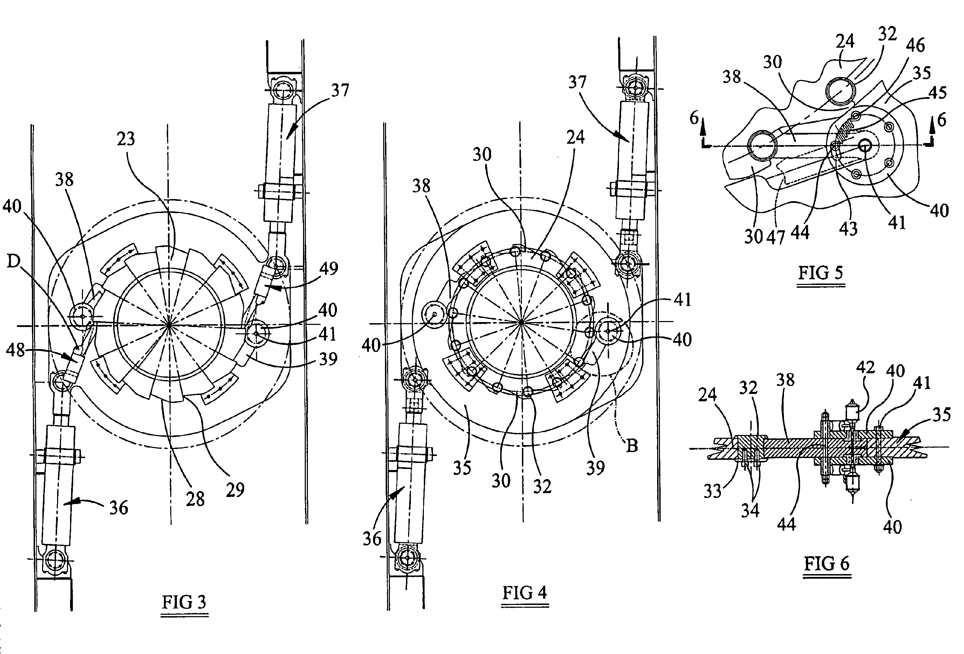

As shown in Figure 1, an outer annular drive plate 35 is around and in juxtaposition with the circular inner drive plate 24, for example as shown in Figure 5. As shown in Figure 1, but best in Figures 3 and 4, this outer annular drive plate 35 has connected to it, at diametrically opposed peripheral portions thereof respectively, the respective forward ends of piston and cylinder drive ram assemblies 36, 37. In use, extension and retraction of the pistons or rods of these assemblies takes place simultaneously, and the connection of these pistons/rods to the outer drive plate 35 is such that the inward and outward movement together of these pistons/rods of the two drive ram assemblies causes the outer annular drive plate 35 to move reciprocally angularly clockwise (as shown in Figures 3 and 4) and then anti-clockwise back to the rest position shown in those Figures. The drive ram assemblies can be powered by any convenient means, such as hydraulics.

It is particularly important with the use of the drive in the digester referred to that there are two, balanced drives, so as to result in pure even torque on the bearing of the digester. This is most satisfactorily achieved by the parallel drives attached at respective diametrically opposed positions on the outer drive plate.

The outer annular drive plate 35 carries, at respective diametrically opposed positions thereon, a pair of drive arms 38, 39, one of which is shown in detail in Figure 6, this also being shown in Figure 5, with the drive arm itself being shown in detail in Figures 17 and 18.

From these Figures it can be seen that the drive arm is pivotally connected at the centre of a circular pivot plate 40 which is secured to the upper surface of the drive plate 35 as shown best in Figure 4, there being two such plates at the respective upper and lower surfaces of the drive plate 35 for each drive arm, with a pivot pin 41 extending from the upper pivot plate to the lower one through the drive arm, this pivot pin being at the axial centre of the pivot plate as shown in Figure 5. As shown in Figure 6, lubrication means 42 to the arm can also be provided.

As shown in Figure 5, there is an elongated slot 43 in each pivot plate and a pivot rod 44 through the arm at its upper and lower ends extending through said respective slots. Connected to this pivot rod 44 at at least one of the upper and lower sides of the arm is a coiled compression spring 45, the other end of which is connected to a similar pivot rod 46 extending between the upper and lower pivot plates but not passing through the arm. By this means the arm is biased to its Figure 5 position shown in full lines but is moveable away from that position to its position shown in dashed lines shown in Figure 5 against the bias of the spring, as will be described. As shown best in Figure 17, the free end surface of the arm is of part cylindrical form 47 so as closely to engage with the surface of the drive pin 32 in a location 31 which is in the open part of the location so that, as will be described, in use, the end of the arm pushes on to the drive pin so as angularly to move the inner drive plate 24 upon extension of the drive ram assemblies.

To retain the ratchet plate 23, and thus the hub, in an angularly moved position as a result of the movement of the inner drive plate 24, briefly described above as a consequence of the extension of the drive ram assemblies, are a pair of anti-runback latches 48, 49 respectively attached at diametrically opposed positions to the underside of the plate 12 and shown best in Figures 1, 7, 9 and 10. Each latch is made up of a mounting plate 50 secured to the underside of the plate 12 as shown best in Figure 10, and a latch element 51 pivotally secured thereto. As shown in Figure 10, the mounting plate is preferably welded to the underside of the plate 12. The inner free end of the mounting plate defines a pivot mounting block 50a spaced below the level of the underside of the plate 12 and with a circular through bore 50b therein. The latch element 51 has at its one end upper and lower arms 52, 53 respectively which fit over the block 50a to receive a pivot pin 54 to connect the two parts of the latch together. Moreover the two parts carry respective pivot pins which receive the respective ends of a coil compression spring 55 which biases the latch radially inwardly. As can be seen best from Figure 10, taken in conjunction with Figure 3, each latch element is biased by the spring 55 so that its outer free end, the side surface of which end is chamfered as at 56, is in engagement with one of the fourteen shoulders 29 adjacent one of the ratchet-like ramp surfaces 28 around the periphery of the ratchet plate 23. In this way the ratchet plate 23 is held against angular movement anti-clockwise as viewed in Figure 14, so that even with any backlash or back force on the rotating arms in a digested compartment, the hub cannot rotate back (clockwise) as viewed in Figures 2 to 4. However the chamfering of the end surface of the latch element means that when the hub rotates clockwise, as described above, the surface rides up over the ramp surfaces 28 against the bias of spring 55 to allow free angular movement of the ratchet plate 23 with the hub and inner drive plate 24. However once the inner drive plate 24 has moved its full extent under the action of the drive arms 38, 39, the latches have then reached the position where they are again biased inwardly to lock against a radial shoulder 29 and thus prevent return angular movement of the ratchet plate 23 and associated hub 11. In Figure 3, it will be noted that the anti-runback latch assemblies are welded in position as shown using the dimensions as a guide to location with the drive rams fully retracted and the drive hub rotated to provide a gap as indicated in Figure 4 between the drive arm and the driven pins at the locations 31. Moreover with regard to Figure 5, it will be noted that this view has been rotated horizontal for clarity and also shows the outer drive plate rotated by 5° clockwise from the position shown in Figure 4 in order to bring the drive arm into mesh with the driven pin. This corresponds to the drive rams being extended by, for example, approximately 110 mm.

Accordingly in operation, starting with the Figure 3 position, the respective ends of the two drive arms will either be engagement with respective pins 32 or slightly spaced therefrom. However the ends of the respective latch elements will be in tight engagement with shoulders 29 respectively of the ratchet plate. Therefore anti-clockwise movement of the hub is prevented. Upon simultaneous operation of the drive rams of the assemblies 36, 37 respectively, the outer drive plate 35 will be moved clockwise through a pre-determined angle and this will bring the inwardly biased drive arms 38, 39 into engagement with their associated pins 32, if they are not already in engagement therewith. The extension of the drive rams will thus cause these arms 38, 39 carried on the angularly moving outer drive plate 35 to push on the pins thereby angularly moving, in a clockwise direction, the inner drive plate 24 and thus also the ratchet plate and the remainder of the hub. During this movement the latch elements 51 will be riding over the ramp surfaces 28 and are thus out of engagement at the shoulders 29, so that the ratchet plate can move freely upon movement of the inner drive plate 24. When the rams are fully extended, or after they have just started to retract, the latch elements 51 will be biased inwardly so as to engage with respective shoulders 29 thereby locking the ratchet plate against anti-clockwise movement. Moreover as the rams retract and the outer annular drive plate 35 moves angularly in an anti-clockwise direction, the drive arms 38 and 39 move away from the pin 32 and ride along the outer surfaces of the fingers 30, as shown in Figure 5, to move to the position shown in phantom against the bias of the springs 46. Thus whilst the hub, and thus the ratchet plate 23 and the inner drive plate 24 remains stationary, the outer drive plate 35 moves back anti-clockwise through the same amount of angular movement which it previously passed through in a clockwise direction. When the rams are fully retracted, the arms 38, 39 will have cleared the ends of the fingers and will be biased back to the position shown in Figure 5 in full, or to a position where the end of each arm is slightly spaced from its associated pin.

This procedure is repeated each time the two drive rams are simultaneously extended and retracted, so that the outer drive plate 35 is subjected to a reciprocating annular movement clockwise and anti-clockwise in turn thereby continuously in each clockwise movement angularly moving the inner drive plate 24, and thus the hub 10 in a clockwise direction. Thus the extension of the rams effects rotational drive to the hub and thus to the arms 15, 16 and 17 attached thereto. However it will be appreciated that in other applications the drive to the hub can be used to drive any other component.

## Claims

1. A drive assembly comprising reciprocating drive means which in one direction of its reciprocating movement from a rest position is in engagement with part of a rotational hub to drive it angularly in one direction to a position where latch means retain the hub against movement in a direction opposite to that in which it is driven, the drive means upon its reciprocating movement in the other direction returning to said rest position, whereupon when its reciprocating cycle repeats, it again drives the previously driven and latched hub angularly in said one direction to a position where it is retained by said latch, so that continuous such reciprocation of the drive means effects rotation of the hub and thus drive thereat, wherein the drive means includes two opposed, parallel drive ram assemblies (36,37) which extend and retract in unison to effect drive of said hub angularly in said one direction, the drive ram assemblies (36,37) being connected to respective diametrically opposed portions of an outer drive plate (35), **characterised in that** the hub has rotatable therewith an inner drive plate (24) around at least a portion of which is said outer drive plate (35), the outer drive plate (35) comprising an annulus within which is disposed the inner drive plate (24) and **in that** the periphery of the inner drive plate is formed with a series of locations (31) for engagement consecutively with said drive means to move the inner drive plate (24) angularly upon each reciprocation of the drive means.

2. A drive assembly as claimed in Claim 1, **characterised in that** the drive ram assemblies (36,37) are connected to respective diametrically opposed peripheral portions of said outer drive plate (35).

3. A drive assembly as claimed in either Claim1 or Claim 2, **characterised in that** each of the drive ram assemblies (36,37) comprises a piston and cylinder arrangement.

4. A drive assembly as claimed in Claim 1, **characterised in that** each location (31) around the periphery of the inner drive plate (24) is provided with a drive pin (32).

5. A drive assembly as claimed in Claim 4, **characterised in that** the drive pin (32) is replacable.

6. A drive assembly as claimed in Claim 4 or Claim 5, **characterised in that** the drive pin (32) is engaged by a complementarily shaped end of a drive arm (38,39) of the drive means when the drive means engage the hub to move it angularly.

7. A drive assembly as claimed in Claim 6, **characterised in that** the drive means includes two drive arms (38,39), each pivoted on the outer drive plate (35) and biased to a position to engage one of said drive pins (32).

8. A drive assembly as claimed in Claim 7, **characterised in that** a free end of each drive arm (38,39) is of part cylindrical form matching the part of the drive pin (32) with which it engages.

9. A drive assembly as claimed in Claim 7 or Claim 8, **characterised in that** the drive arms (38,39) are pivoted to the outer drive plates (35) at respective diametrically opposed inner peripheral portions thereof.

10. A drive assembly as claimed in any one of Claims 4 to 9, **characterised in that** each location provides an outer surface over which the drive arm (38,39), released from its engagement with a drive pin (32), rides against its bias, when the outer drive plate (35) is angularly moved by the drive means returning to its rest position.

11. A drive assembly as claimed in any one of the preceding Claims, **characterised in that** the hub has rotatable therewith a ratchet plate (23).

12. A drive assembly as claimed in Claim 11, **characterised in that** around the periphery of the ratchet plate (23) is a series of ramps (28) and shoulders (29) engagable by the latch means as the hub is moved angularly by consecutive reciprocations of the drive means.

13. A drive assembly as claimed in Claim 12, **characterised in that** the latch means comprises two latches (48,49) attached to a plate (12) relative to which the rotatable hub is driven.

14. A drive assembly as claimed in Claim 13, **characterised in that** the two latches (48,49) are respectively attached to said fixed plate (12) at diametrically opposed positions.

15. A drive assembly as claimed in Claim 13 or Claim 14, **characterised in that** each latch (48,49) comprises a mounting plate (50), fixed to said fixed plate (12), and a latch element (51) pivotally attached to said mounting plate (50).

16. A drive assembly as claimed in Claim 15, **characterised in that** each latch element (51) is biased into engagement with said ratchet plate (23), an outer free end engaging one of said shoulders thereof, when the drive means returns to its rest position, to retain the hub against movement in said other direction, and riding over one of said ramps (28) to move to engagement with the next successive shoulder (29) when the hub is angularly driven in said one direction by the drive means.

17. A drive assembly as claimed in any one of the preceding claims, **characterised in that** a plurality of outwardly extending arms (15,16,17) are connected to the hub so as to move rotationally therewith, in use.

18. A drive assembly as claimed in Claim 17, **characterised in that** at the central rotational axis of the hub is an air supply tube (22) for passing air, in use, to the arms (15,16,17).

19. A drive assembly as claimed in Claim 18, **characterised in that** each arm (15,16,17) has at least one air nozzle therein for injecting air, supplied to one end thereof from said air supply tube (22), out of the arm at a position along its length.

20. A drive assembly as claimed in any one of the preceding claims, **characterised in that** the assembly is part of a waste material digester.

## Patentansprüche

1. Antriebsbaugruppe, die hin- und hergehende Antriebsmittel umfasst, die in einer Richtung ihrer hin- und hergehenden Bewegung von einer Ruheposition aus in Eingriff mit einem Teil einer sich drehenden Nabe ist, um sie winklig in eine Richtung zu einer Position zu drehen, wo Klinkenmittel die Nabe gegen eine Bewegung in einer Richtung, entgegengesetzt zu der, in der sie angetrieben wird, festhalten, wobei die Antriebsmittel auf ihre hin- und hergehende Bewegung hin in der anderen Richtung zu der Ruheposition zurückkehren, woraufhin sie, wenn sich ihr hin- und hergehender Zyklus wiederholt, die zuvor angetriebene und eingeklinkte Nabe wieder in der einen Richtung zu einer Position winklig antreibt, wo sie durch die Klinke festgehalten wird, so dass eine kontinuierliche solche Hin- und Herbewegung der Antriebsmittel eine Drehung der Nabe und folglich einen Antrieb an derselben bewirkt, wobei die Antriebsmittel zwei einander gegenüberliegende, parallele Antriebsstößelbaugruppen (36, 37) einschließt, die sich im Gleichklang ausfahren und einziehen, um den winkligen Antrieb der Nabe in der einen Richtung zu bewirken, wobei die Antriebsstößelbaugruppen (36, 37) mit jeweiligen diametral gegenüberliegenden Abschnitten einer äußeren Antriebsplatte (35) verbunden sind, **dadurch gekennzeichnet, dass** die Nabe, drehbar mit derselben, eine innere Antriebsplatte (24) hat, wobei sich um wenigstens einen Abschnitt derselben die äußere Antriebsplatte (35) befindet, wobei die äußere Antriebsplatte (35) einen Kreisring umfasst, innerhalb dessen die innere Antriebsplatte (24) angeordnet ist, und dadurch, dass der Umfang der inneren Antriebsplatte mit einer Reihe von Positionen (31) für einen aufeinanderfolgenden Eingriff mit den Antriebsmitteln geformt ist, um die innere Antriebsplatte (24) auf jede Hin- und Herbewegung der Antriebsmittel hin winklig zu bewegen.

2. Antriebsbaugruppe nach Anspruch 1, **dadurch gekennzeichnet, dass** die Antriebsstößelbaugruppen (36, 37) mit jeweiligen diametral gegenüberliegenden Abschnitten der äußeren Antriebsplatte (35) verbunden sind.

3. Antriebsbaugruppe nach Anspruch 1 oder Anspruch 2, **dadurch gekennzeichnet, dass** jede der Antriebsstößelbaugruppen (36, 37) eine Anordnung von Kolben und Zylinder umfasst.

4. Antriebsbaugruppe nach Anspruch 1, **dadurch gekennzeichnet, dass** jede Position (31) um den Umfang der inneren Antriebsplatte (24) mit einem Mitnehmerstift (32) versehen ist.

5. Antriebsbaugruppe nach Anspruch 4, **dadurch gekennzeichnet, dass** der Mitnehmerstift (32) austauschbar ist.

6. Antriebsbaugruppe nach Anspruch 4 oder Anspruch 5, **dadurch gekennzeichnet, dass** der Mitnehmerstift (32) durch ein komplementär geformtes Ende eines Antriebsarms (38, 39) der Antriebsmittel in Eingriff genommen wird, wenn die Antriebsmittel die Nabe in Eingriff nehmen, um sie winklig zu bewegen.

7. Antriebsbaugruppe nach Anspruch 6, **dadurch gekennzeichnet, dass** die Antriebsmittel zwei Antriebsarme (38, 39) einschließen, deren jeder an der äußeren Antriebsplatte (35) schwenkbar angebracht und zu einer Position vorgespannt ist, um einen der Mitnehmerstifte (32) in Eingriff zu nehmen.

8. Antriebsbaugruppe nach Anspruch 7, **dadurch gekennzeichnet, dass** ein freies Ende jedes Antriebsarms (38, 39) eine teilzylindrische Form hat, die mit dem Teil des Mitnehmerstifts (32), mit dem es ineinandergreift, zusammenpasst.

9. Antriebsbaugruppe nach Anspruch 7 oder Anspruch 8, **dadurch gekennzeichnet, dass** die Antriebsarme (38, 39) schwenkbar an den äußeren Antriebsplatten (35), an jeweiligen diametral gegenüberliegenden Innenumfangsabschnitten derselben, angebracht sind.

10. Antriebsbaugruppe nach einem der Ansprüche 4 bis 9, **dadurch gekennzeichnet, dass** jede Position eine Außenfläche bereitstellt, über die der Antriebsarm (38, 39), gelöst aus seinem Eingriff mit einem Mitnehmerstift (32), gegen seine Vorspannung gleitet, wenn die äußere Antriebsplatte (35) durch die zu ihrer Ruheposition zurückkehrenden Antriebsmittel winklig bewegt wird.

11. Antriebsbaugruppe nach einem der vorhergehenden Ansprüche, **dadurch gekennzeichnet, dass** die Nabe, drehbar mit derselben, eine Sperrklinkenplatte (23) hat.

12. Antriebsbaugruppe nach Anspruch 11, **dadurch gekennzeichnet, dass** es um den Umfang der Sperrklinkenplatte (23) eine Reihe von Rampen (28) und Absätzen (29) gibt, die durch die Klinkenmittel in Eingriff genommen werden können, wenn die Nabe durch aufeinanderfolgende Hin- und Herbewegungen der Antriebsmittel winklig bewegt wird.

13. Antriebsbaugruppe nach Anspruch 12, **dadurch gekennzeichnet, dass** die Klinkenmittel zwei Klinken (48, 49) umfassen, die an einer Platte (12) befestigt sind, im Verhältnis zu der die drehbare Nabe angetrieben wird.

14. Antriebsbaugruppe nach Anspruch 13, **dadurch gekennzeichnet, dass** die zwei Klinken (48, 49) jeweils an diametral gegenüberliegenden Positionen an der feststehenden Platte (12) befestigt sind.

15. Antriebsbaugruppe nach Anspruch 13 oder Anspruch 14, **dadurch gekennzeichnet, dass** jede Klinke (48, 49) eine Montageplatte (50), die an der feststehenden Platte (12) befestigt ist, und ein Klinkenelement (51), das schwenkbar an der Montageplatte (50) befestigt ist, umfasst.

16. Antriebsbaugruppe nach Anspruch 15, **dadurch gekennzeichnet, dass** jedes Klinkenelement (51) in einen Eingriff mit der Sperrklinkenplatte (23) vorgespannt ist, wobei ein äußeres freies Ende einen der Absätze derselben in Eingriff nimmt, wenn die Antriebsmittel zu ihrer Ruheposition zurückkehren, um die Nabe gegen eine Bewegung in der anderen Richtung festzuhalten, und über eine der Rampen (28) gleitet, um sich zu einem Eingriff mit dem nächsten aufeinanderfolgenden Absatz (29) zu bewegen, wenn die Nabe durch die Antriebsmittel winklig in der einen Richtung angetrieben wird.

17. Antriebsbaugruppe nach einem der vorhergehenden Ansprüche, **dadurch gekennzeichnet, dass** mehrere sich nach außen erstreckende Arme (15, 16, 17) mit der Nabe verbunden sind, um sich so bei Anwendung drehend mit derselben zu bewegen.

18. Antriebsbaugruppe nach Anspruch 17, **dadurch gekennzeichnet, dass** sich an der Mitteldrehachse der Nabe eine Luftzufuhrröhre (22) befindet, um bei Anwendung Luft zu den Armen (15, 16, 17) zu führen.

19. Antriebsbaugruppe nach Anspruch 18, **dadurch gekennzeichnet, dass** jeder Arm (15, 16, 17) in demselben wenigstens eine Luftdüse hat, um die Luft, die von der Luftzufuhrröhre (22) einem Ende desselben zugeführt wird, an einer Position längs dessen Länge aus dem Arm auszustoßen.

20. Antriebsbaugruppe nach einem der vorhergehenden Ansprüche, **dadurch gekennzeichnet, dass** die Baugruppe ein Teil eines Abfallmaterialreaktors ist.

## Revendications

1. Ensemble d'entraînement comprenant un moyen d'entraînement alternatif qui, dans une direction de son mouvement alternatif partant d'une position de repos, est en prise avec une partie d'un moyeu rotatif pour entraîner celui-ci de manière angulaire dans une direction vers une position où un moyen de verrouillage retient le moyeu et l'empêche d'effectuer un mouvement dans une direction opposée à celle dans laquelle il est entraîné, le moyen d'entraînement retournant vers ladite position de repos lors de son mouvement alternatif dans l'autre direction, après quoi, lorsque son cycle alternatif se répète, le moyen d'entraînement entraîne à nouveau le moyeu précédemment entraîné et verrouillé de manière angulaire dans ladite direction vers une position où il est retenu par ledit verrou, de manière à ce que ce mouvement alternatif continu du moyen d'entraînement entraîne une rotation du moyeu et, ainsi, un entraînement à son niveau, dans lequel le moyen d'entraînement inclut deux vérins d'entraînement parallèles (36, 37) opposés qui s'étendent et se rétractent en même temps pour obtenir l'entraînement dudit moyeu de manière angulaire dans ladite direction, les vérins d'entraînement (36, 37) étant reliés à des parties d'une plaque d'entraînement extérieure (35) diamétralement opposées respectives, **caractérisé par le fait que** le moyeu est pourvu d'une plaque d'entraînement intérieure (24) pouvant tourner avec lui et autour d'au moins une portion de laquelle est située ladite plaque d'entraînement extérieure (35), la plaque d'entraînement extérieure (35) comprenant une couronne à l'intérieur de laquelle est disposée la plaque d'entraînement intérieure (24), et **par le fait qu'**une série de positions (31) est formée à la périphérie de la plaque d'entraînement intérieure, pour un engagement successif avec ledit moyen d'entraînement pour déplacer la plaque d'entraînement intérieure (24) de manière angulaire à chaque mouvement alternatif du moyen d'entraînement.

2. Ensemble d'entraînement selon la revendication 1, **caractérisé par le fait que** les vérins d'entraînement (36, 37) sont reliés à des parties périphériques diamétralement opposées respectives de ladite plaque d'entraînement extérieure (35).

3. Ensemble d'entraînement selon la revendication 1 ou la revendication 2, **caractérisé par le fait que** chacun des vérins d'entraînement (36, 37) comprend un dispositif à piston et cylindre.

4. Ensemble d'entraînement selon la revendication 1, **caractérisé par le fait que** chaque position (31) autour de la périphérie de la plaque d'entraînement intérieure (24) est pourvue d'un axe d'entraînement (32).

5. Ensemble d'entraînement selon la revendication 4, **caractérisé par le fait que** l'axe d'entraînement (32) est remplaçable.

6. Ensemble d'entraînement selon la revendication 4 ou la revendication 5, **caractérisé par le fait que** l'axe d'entraînement (32) est engagé par une extrémité de forme complémentaire d'un bras d'entraînement (38, 39) du moyen d'entraînement lorsque le moyen d'entraînement se met en prise avec le moyeu pour le déplacer de manière angulaire.

7. Ensemble d'entraînement selon la revendication 6, **caractérisé par le fait que** le moyen d'entraînement inclut deux bras d'entraînement (38, 39), chacun étant monté pivotant sur la plaque d'entraînement extérieure (35) et contraint vers une position pour s'engager avec un desdits axes d'entraînement (32).

8. Ensemble d'entraînement selon la revendication 7, **caractérisé par le fait qu'**une extrémité libre de chaque bras d'entraînement (38, 39) a une forme en partie cylindrique correspondant à la partie de l'axe d'entraînement (32) avec laquelle elle s'engage.

9. Ensemble d'entraînement selon la revendication 7 ou la revendication 8, **caractérisé par le fait que** les bras d'entraînement (38, 39) sont montés pivotants sur les plaques d'entraînement extérieures (35) au niveau de parties périphériques intérieures diamétralement opposées respectives de celle-ci.

10. Ensemble d'entraînement selon l'une quelconque des revendications 4 à 9, **caractérisé par le fait que** chaque position fournit une surface extérieure sur laquelle le bras d'entraînement (38, 39), libéré de son engagement avec un axe d'entraînement (32), glisse dans le sens opposé à sa contrainte lorsque la plaque d'entraînement extérieure (35) est déplacée de manière angulaire par le moyen d'entraînement retournant vers sa position de repos.

11. Ensemble d'entraînement selon l'une quelconque des revendications précédentes, **caractérisé par le fait que** le moyeu est pourvu d'une plaque d'encliquetage (23) pouvant tourner avec lui.

12. Ensemble d'entraînement selon la revendication 11, **caractérisé par le fait qu'**une série de rampes (28) et d'épaulements (29) pouvant être engagés par le moyen de verrouillage lorsque le moyeu est déplacé de manière angulaire par des mouvements alternatifs successifs du moyen d'entraînement est située autour de la périphérie de la plaque d'encliquetage (23).

13. Ensemble d'entraînement selon la revendication 12, **caractérisé par le fait que** le moyen de verrouillage comprend deux verrous (48, 49) fixés sur une plaque (12) par rapport à laquelle le moyeu rotatif est entraîné.

14. Ensemble d'entraînement selon la revendication 13, **caractérisé par le fait que** les deux verrous (48, 49) sont fixés respectivement sur ladite plaque fixe (12) au niveau de positions diamétralement opposées.

15. Ensemble d'entraînement selon la revendication 13 ou la revendication 14, **caractérisé par le fait que** chaque verrou (48, 49) comprend une plaque de montage (50) fixée sur ladite plaque fixe (12) et un élément de verrou (51) attaché de manière pivotante sur ladite plaque de montage (50).

16. Ensemble d'entraînement selon la revendication 15, **caractérisé par le fait que** chaque élément de verrou (51) est contraint de s'encliqueter avec ladite plaque d'encliquetage (23), une extrémité libre extérieure s'engageant avec un desdits épaulements de celle-ci lorsque le moyen d'entraînement retourne vers sa position de repos pour retenir le moyeu et l'empêcher d'effectuer un mouvement dans ladite autre direction et glissant sur une desdites rampes (28) pour aller s'engager avec le prochain épaulement successif (29) lorsque le moyeu est entraîné de manière angulaire dans ladite direction par le moyen d'entraînement.

17. Ensemble d'entraînement selon l'une quelconque des revendications précédentes, **caractérisé par le fait qu'**une pluralité de bras (15, 16, 17) s'étendant vers l'extérieur sont reliés au moyeu de manière à effectuer une rotation avec celui-ci lors de l'utilisation.

18. Ensemble d'entraînement selon la revendication 17, **caractérisé par le fait qu'**un tube d'alimentation en air (22) permettant de faire passer de l'air, lors de l'utilisation, vers les bras (15, 16, 17) est situé au niveau de l'axe de rotation central du moyeu.

19. Ensemble d'entraînement selon la revendication 18, **caractérisé par le fait que** chaque bras (15, 16, 17) est pourvu d'au moins une buse d'air à l'intérieur pour injecter de l'air, fourni à une extrémité de celui-ci par ledit tube d'alimentation en air (22), à l'extérieur du bras au niveau d'une position le long de sa longueur.

20. Ensemble d'entraînement selon l'une quelconque des revendications précédentes, **caractérisé par le fait que** l'ensemble fait partie d'un digesteur de déchets.
